# EUROPÄISCHE PATENTSCHRIFT

(11) **EP 3 513 932 B1**
(45) Veröffentlichungstag und Bekanntmachung des Hinweises auf die Patenterteilung: **05.08.2020**
(21) Anmeldenummer: 18212454.5
(22) Anmeldetag: 13.12.2018
(51) Int. Cl.: B27F 7/00, B27M 3/00, E04C 2/12, B23Q 9/00, B23Q 17/24, B25J 15/00

(54) **VERFAHREN ZUM HERSTELLEN VON WANDELEMENTEN AUS NAGELBAREN UND/ODER KLAMMERBAREN MATERIALIEN**
METHOD FOR PRODUCING WALL ELEMENTS FROM MATERIALS WHICH CAN BE NAILED AND/OR CLAMPED
PROCÉDÉ DE FABRICATION D'ÉLÉMENTS MURAUX À PARTIR DE MATIÈRES CLOUABLES ET / OU SERRABLES

(30) Priorität: 19.01.2018 DE 102018000415
(43) Veröffentlichungstag der Anmeldung: 24.07.2019
(73) Patentinhaber: Raimund Beck Nageltechnik GmbH, 5270 Mauerkirchen (AT)
(72) Erfinder: Siemers, Stefan, 84489 Burghausen (DE)
(74) Vertreter: Albrecht, Ralf

(56) Entgegenhaltungen:
- EP-A2- 1 369 214
- EP-A2- 2 564 990
- WO-A1-2010/025204
- US-A1- 2016 046 010
- US-B1- 6 378 197
- US-B1- 9 827 677

## Beschreibung

Die vorliegende Erfindung betrifft ein Verfahren zum Herstellen von Wandelementen aus nagelbaren und/oder klammerbaren Materialien, bei welchem
- ein Wandelementrahmen auf einen horizontalen Arbeitstisch positioniert wird,
- Wandplatten auf den Wandelementrahmen gelegt werden und
- die Wandplatten an dem Wandelementrahmen durch Nägel und/oder Klammern, die mittels eines Druckluftsetzgerätes eingetrieben werden, befestigt werden.

Weiterhin betrifft die vorliegende Erfindung eine Bearbeitungseinrichtung zum Herstellen von Wandelementen aus nagelbaren und/oder klammerbaren Materialien gemäß dem Oberbegriff des Patentanspruchs 8. Ein derartiges Verfahren und eine derartige Bearbeitungsvorrichtung gehen beispielsweise aus der US 6378 197 B1 hervor.

Im industriellen Fertighausbau werden ganze Hauswände aus Holz in einer Werkhalle montiert. Die einzelnen Wände oder Wandelemente bestehen jeweils aus massiven Holzständern, welche beidseitig mit Plattenmaterial beplankt werden. Für die Montage werden auf einem horizontalen Arbeitstisch Holzständer entsprechend der gewünschten Statik aufgelegt und mit Nägeln oder ähnlichen Befestigungsmitteln zu einem Wandelementrahmen miteinander verbunden. In einem zweiten Arbeitsgang wird der so entstandene, nach Art einer Fachwerkkonstruktion ausgebildete Wandelementrahmen mit Wandplatten belegt. Die Wandplatten werden mit Klammern oder auch Nägeln unter Nutzung von Druckluftsetzgeräten mit dem Wandelementrahmen zu einem schubsteifen Verbund gefügt. Nach Fertigstellung der einen Seite wird die Wand umgedreht und die zweite Seite auf dieselbe Art und Weise geschlossen.

Der Vorgang dieser Montage erfolgt von Hand oder aber bei größeren Industriebetrieben mittels Portalanlage oder Knickarmroboter. Die Portalanlage oder der Knickarmroboter übernimmt vorwiegend die zeitaufwändige Arbeit des Klammer- bzw. Nagelsetzens.

Die Investitionen in eine Portalanlage oder in einen Knickarmroboter rechnen sich für einen Industriebetrieb erst einer gewissen Anzahl von zu fertigenden Häusern beziehungsweise Wandelementen pro Jahr. Gerade kleine oder mittelständische Betriebe scheuen die Investition in diese Technologie, weil die Amortisationszeit bedingt durch die geringe Anzahl an Bauprojekten zu lange ist.

Ferner ist die Aufstellung einer Portalanlage oder eines Knickarmroboters meist mit längeren Stillstandszeiten in der Wandmontage verbunden. Des Weiteren erfordert die Montage der Führungsschienen für eine Portalanlage im Bodenbereich eines guten Industriebodens, der häufig nicht vorhanden ist.

Aufgabe der vorliegenden Erfindung ist es daher, ein Verfahren zum Herstellen von Wandelementen aus nagelbaren und/oder klammerbaren Materialien der eingangs genannten Art sowie eine Bearbeitungseinrichtung zur Durchführung des Verfahrens anzugeben, die ein automatisiertes Herstellen von Wandelementen bei geringem Aufwand ermöglichen.

Diese Aufgabe ist bei einem Verfahren der eingangsgenannten Art dadurch gelöst, dass ein - insbesondere autonomer - mobiler Roboter, der wenigstens ein Druckluftsetzgerät und/oder wenigstens eine Fräseinheit trägt, auf der von den Wandplatten gebildeten Oberfläche frei verfahrbar positioniert wird, dass der Roboter auf den Wandplatten stehend automatisch gesteuert entlang der von den Wandplatten gebildeten Oberfläche verfahren wird, und dass an vorgegebenen Positionen die wenigstens eine Fräseinheit und/oder das wenigstens eine Druckluftsetzgerät automatisch gesteuert betätigt wird, um die Wandplatten zu bearbeiten und/oder an dem Wandelementrahmen zu befestigen.

Der Erfindung liegt somit die Überlegung zugrunde, zur Befestigung der Wandplatten an dem Wandelementrahmen beziehungsweise zur Bearbeitung der Wandplatten einen mobilen Roboter zu verwenden, der die für die durchzuführenden Arbeiten notwendigen Bearbeitungsgeräte, d. h. ein Druckluftsetzgerät zum Eintreiben von Nägeln und/oder Klammern für die Fixierung der Wandplatten an dem Wandelementrahmen und/oder eine Fräseinheit zur Bearbeitung der Wandplatten, trägt und zur Ausführung der Arbeit auf die von den Wandplatten gebildete Oberfläche gestellt und auf dieser verfahren wird. Mit anderen Worten wird das Druckluftsetzgerät beziehungsweise die Fräseinheit zum Ausschneiden von Fensterdurchbrüchen oder zum Besäumen von überstehenden Plattenkanten in vorgegebenen Bahnen über die zu montierenden Wandplatten geführt. Hierfür wird ein autonomer Roboter verwendet, welcher sich auf Rädern oder auf Ketten über die liegenden Wandplatten bewegt. Ein solcher autonomer Roboter kann von der Raumdecke ausgehend mit Elektrizität und Druckluft versorgt werden und ist mit dem Druckluftsetzgerät und/oder einer angetriebenen Fräseinheit bestückt.

Entsprechend zeichnet sich die erfindungsgemäße Bearbeitungseinrichtung zum Herstellen von Wandelementen aus nagelbaren und/oder klammerbaren Materialien, die insbesondere zur Durchführung des erfindungsgemäßen Verfahrens geeignet ist, auch durch
- einen horizontalen Arbeitstisch, auf welchem ein Wandelementrahmen eines herzustellenden Wandelements liegend positioniert werden kann,
- einen mobilen - insbesondere autonomen - Roboter, der wenigstens ein Druckluftsetzgerät und/oder wenigstens eine Fräseinheit trägt,
- eine optische Erfassungseinrichtung, die ausgebildet ist, um die Position und/oder die Gestalt des Wandelementrahmens zu erfassen, und
- eine zentrale Steuerung, die mit der optischen Erfassungseinrichtung und dem Roboter gekoppelt und ausgebildet ist, um auf der Grundlage von Daten, die sie von der optischen Erfassungseinrichtung erhält, den Roboter, der auf einer Oberfläche positioniert ist, die von Wandplatten gebildet wird, welche auf einen auf dem Arbeitstisch positionierten Wandelementrahmen gelegt sind, auf den Wandplatten entlang der Oberfläche automatisch zu verfahren und an vorgegebenen Positionen die wenigstens eine Fräseinheit und/oder wenigstens ein Druckluftsetzgerät automatisch zu betätigen, um die Wandplatten zu bearbeiten und/oder an einem Wandrahmenelement zu befestigen.

In weiterer Ausgestaltung der Erfindung ist eine Erfassungseinrichtung vorgesehen, welche die Positionen und/oder die Gestalt des Wandelementrahmens erfasst und entsprechende Daten an eine zentrale Steuerung übermittelt. Diese Daten werden genutzt, um den Roboter sowie die an diesem vorgesehenen Bearbeitungsgeräte zu steuern.

In bevorzugter Weise ist die Steuerung mit einem Bildschirm verbunden, auf dem ein Bild des Wandelementrahmens und dessen Position auf dem Arbeitstisch auf der Grundlage der von der optischen Erfassungseinrichtung übermittelten Daten angezeigt wird. Zusätzlich können auf dem Bildschirm auch gewünschte Positionen von Wandöffnungen wie beispielsweise Fensterdurchbrüchen markiert sein.

Anhand der von der optischen Erfassungseinrichtung übermittelten Daten wird ein Verfahrweg des Roboters berechnet und der Roboter entlang des Verfahrweges automatisch gesteuert verfahren. Dies stellt eine vollautomatische Betriebsweise dar. Ebenso ist es möglich, auf der Basis der von der optischen Erfassungseinrichtung übermittelten Daten zunächst einen Verfahrweg des Roboters zu berechnen, wobei dieser Verfahrweg auf dem Bildschirm angezeigt wird und ein Nutzer die Möglichkeit erhält, den Verfahrweg des Roboters auf dem Bildschirm zu korrigieren. Dabei kann ein Nutzer insbesondere die Möglichkeit erhalten, einen gewünschten Verfahrweg des Roboters auf dem Bildschirm zu markieren, wobei dann der Roboter entlang des markierten Verfahrwegs automatisch gesteuert verfahren wird. In diesem Fall ist der Bildschirm für eine direkte Dateneingabe - insbesondere als Touchpad - ausgebildet. Der Roboter wird dann entlang des korrigierten Verfahrwegs automatisch gesteuert verfahren. Die Steuerung ist entsprechend ausgebildet, um die Kommunikation zwischen dem Bildschirm, der optischen Erfassungseinrichtung und dem Roboter sowie den daran gehaltenen Bearbeitungsgeräten zu führen.

Gemäß einer weiteren Ausgestaltung des erfindungsgemäßen Verfahren ist vorgesehen, dass der Nutzer die Möglichkeit erhält, auf dem Bildschirm Bearbeitungspositionen und/oder Bearbeitungswege für die wenigstens eine Fräseinheit und/oder das wenigstens eine Druckluftsetzgerät festzulegen, wobei der Roboter und/oder die Fräseinheit und/oder das wenigstens ein Druckluftsetzgerät entsprechend der festgelegten Bearbeitungspositionen und/oder Bearbeitungswege gesteuert verfahren und betätigt wird.

Vorrichtungsmäßig ist die Bearbeitungseinrichtung entsprechend dadurch gekennzeichnet, dass der Bildschirm für eine direkte Dateneingabe - insbesondere als Touchpad - ausgebildet ist und ein Nutzer die Möglichkeit erhält, Bearbeitungspositionen und/oder Bearbeitungswege für die wenigstens eine Fräseinheit und/oder das wenigstens ein Druckluftsetzgerät festzulegen, wobei die Steuerung ausgebildet ist, um den Roboter und/oder die Fräseinheit und/oder das wenigstens ein Druckluftsetzgerät entsprechend der festgelegten Bearbeitungspositionen und/oder Bearbeitungswege gesteuert zu verfahren und zu betätigen.

Alternativ kann das erfindungsgemäße Verfahren derart ausgestaltet sein, dass anhand der von der optischen Erfassungseinrichtung übermittelten Daten die wenigstens eine Fräseinheit und/oder die wenigstens ein Druckluftsetzgerät automatisch betätigt wird, um die Wandplatten zu befestigen und/oder an den Wandelementrahmen zu befestigen.

Generell können für unterschiedliche Typen von Wandelementen der optimale Verfahrweg, die Befestigungspositionen und auch die Anzahl der an der jeweiligen Befestigungsposition einzutreibenden Nägel in einer Datenbank abgelegt sein, auf welche die Steuerung Zugriff nimmt. Dann ist eine mehr oder weniger vollautomatische Montage der Wandelemente möglich. Über die Eingriffsmöglichkeit des Nutzers beziehungsweise Bedieners der erfindungsgemäßen Bearbeitungseinrichtung/Anlage lässt sich die Montage aber auch für jedes Wandelement manuell eingeben oder beeinflussen.

Die optische Erfassungseinrichtung umfasst bevorzugt mehrere Kameras und/oder Lasererfassungsgeräte, die insbesondere oberhalb des Arbeitstisches vorgesehen sind.

Hinsichtlich weiterer vorteilhafter Ausgestaltungen der Erfindung wird auf die Unteransprüche sowie die nachfolgende Beschreibung eines Ausführungsbeispiels unter Bezugnahme auf die vorliegende Zeichnung verwiesen.

In der Zeichnung zeigt:
- Figur 1: einen Arbeitstisch mit zugeordneten Kameras einer Bearbeitungseinrichtung zum Herstellen von Wandelementen aus nagelbaren und/oder klammerbaren Materialien gemäß der vorliegenden Erfindung in perspektivischer Ansicht;
- Figur 2: die Anordnung aus Figur 1, wobei auf den Arbeitstisch ein Wandelementrahmen eines herzustellenden Wandelements aufgelegt ist,
- Figur 3: eine zu Figur 2 entsprechende Ansicht, wobei auf den Wandelementrahmen drei Wandplatten positioniert sind,
- Figur 4: die Anordnung aus Figur 3, wobei auf die von den Wandplatten gebildete Oberfläche ein Roboter aufgesetzt ist, und
- Figur 5: ein Tablett-PC der erfindungsgemäßen Bearbeitungseinrichtung.

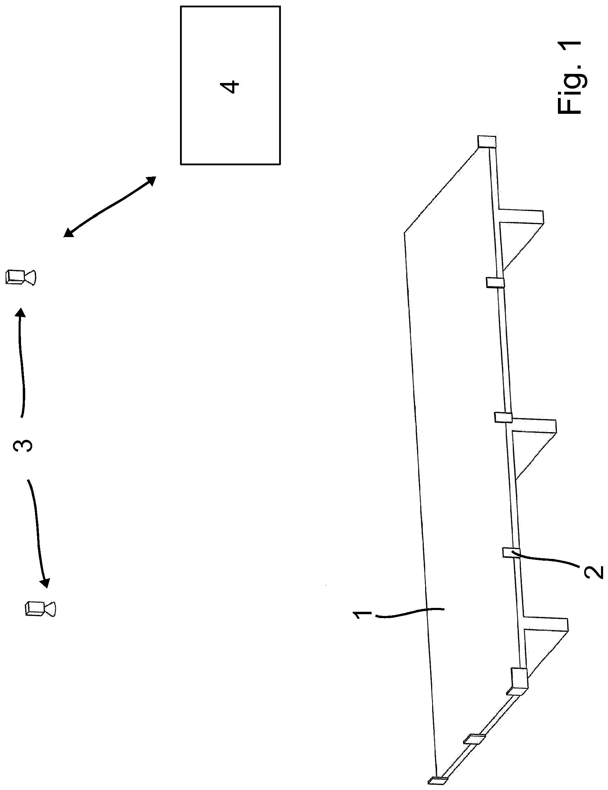

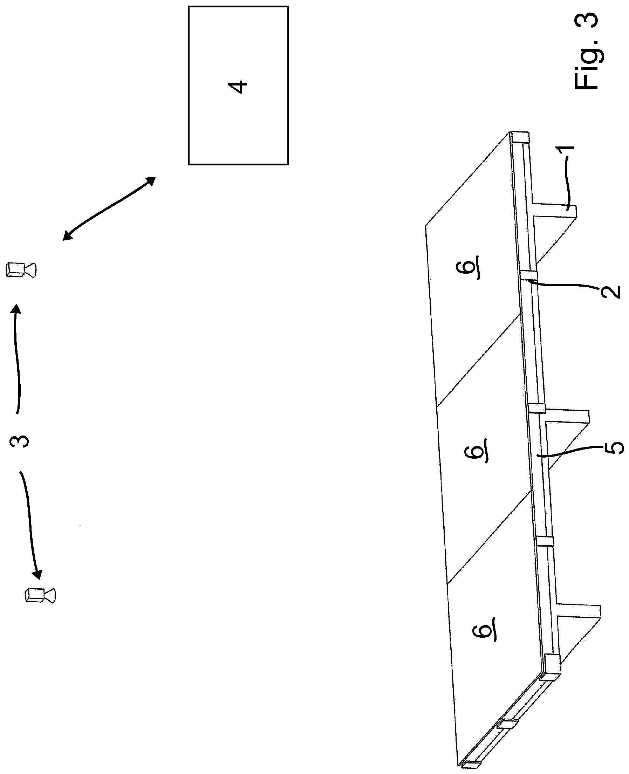

In den Figuren 1 bis 4 sind die Arbeitsschritte einer Ausführungsform des Verfahrens zum Herstellen von Wandelementen aus nagelbaren und/oder klammerbaren Materialien mittels einer entsprechenden Bearbeitungseinrichtung gemäß der vorliegenden Erfindung dargestellt. Die erfindungsgemäße Bearbeitungseinrichtung zur Herstellung von Wandelementen umfasst einen horizontalen Arbeitstisch 1, der eine horizontale Auflagefläche rechteckiger Grundform definiert, wobei entlang einer Längsseite und entlang einer Querseite des Arbeitstisches 1 Positioniervorsprünge 2 vorgesehen sind, die nach oben über die Arbeitsfläche des Arbeitstisches 1 vorstehen und als Positionierhilfe dienen. Die Bearbeitungseinrichtung umfasst ferner eine optische Erfassungseinrichtung 3, die hier zwei Kameras umfasst, welche oberhalb des Arbeitstisches 1 positioniert und beispielsweise an der Decke einer Maschinenhalle oder einer geeigneten Tragkonstruktion befestigt sind. Die optische Erfassungseinrichtung 3 ist ausgebildet, um die Position und die Gestalt von Werkstücken, die auf der Arbeitsfläche des Arbeitstisches 1 positioniert sind, zu erfassen. Die optische Erfassungseinrichtung 3 ist mit einer zentralen Steuerung 4 der Bearbeitungseinrichtung gekoppelt.

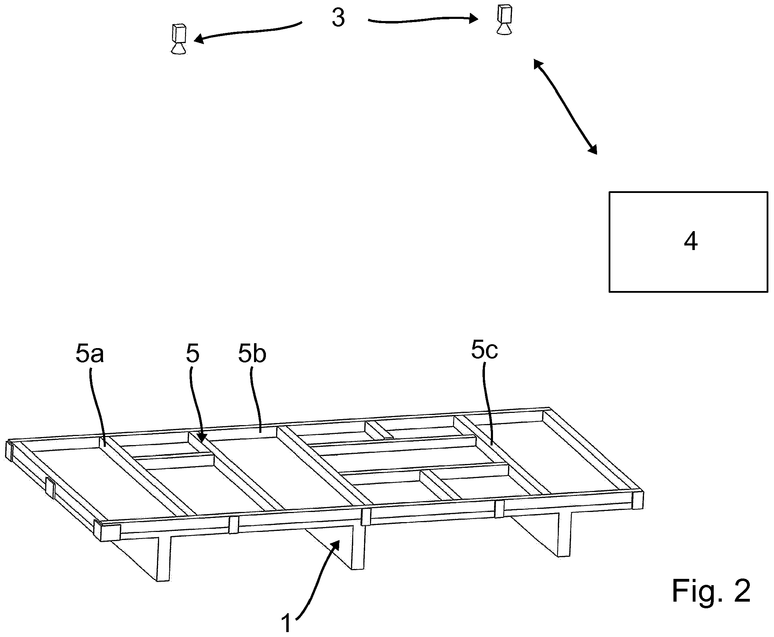

Zur Herstellung eines Wandelements wird zunächst ein Wandelementrahmen 5 auf der Arbeitsfläche des Arbeitstisches 1 positioniert und an den Positioniervorsprüngen 2 in Anlage gebracht und auf diese Weise ausgerichtet. Der Wandelementrahmen 5 besteht aus einer Vielzahl von massiven Holzstreben 5a, 5b, 5c..., auch Holzständer genannt, welche in der Regel miteinander vernagelt sind. Grundsätzlich ist es auch möglich, die einzelnen Holzstreben 5a, 5b, 5c... auf dem Arbeitstisch 1 zu positionieren und dort miteinander zu dem in Figur 2 dargestellten Fachwerk, welches die erforderliche Steifigkeit und Statik besitzt, zu montieren. Die Gestalt und Position des Wandelementrahmens 5 wird von den Kameras der optischen Erfassungseinrichtung 3 erfasst und an die Steuerung 4 übermittelt.

In einem weiteren Arbeitsschritt wird die Oberseite des Wandelementrahmens 5 beplankt, d. h. es werden drei Wandplatten 6 auf den Wandelementrahmen 5 gelegt, so dass sie eine geschlossene Oberfläche bilden.

In einem weiteren Schritt werden die Wandplatten 6 an dem Wandelementrahmen 5 durch Nägel und/oder Klammern befestigt, die mittels eines Druckluftsetzgerätes in die Wandplatten 6 und den Wandelementrahmen 5 eingetrieben werden. Des Weiteren können in die Wandplatten 6 Fensterdurchbrüche eingebracht oder überstehende Plattenkanten besäumt werden.

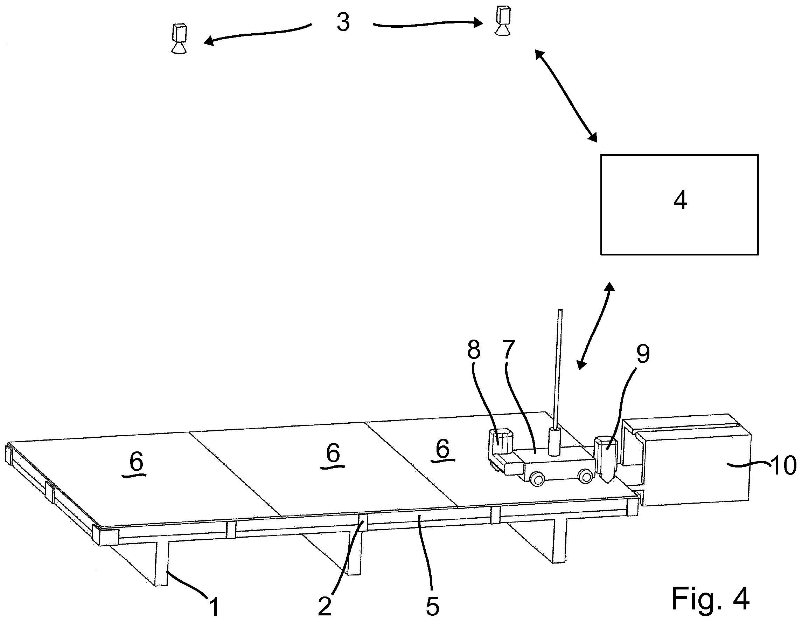

Diese Arbeitsgänge erfolgen durch einen mobilen autonomen Roboter 7, der die für die durchzuführenden Arbeiten notwendigen Bearbeitungsgeräte trägt und zur Ausführung der Arbeiten automatisch gesteuert auf der von den Wandplatten 6 gebildeten Oberfläche verfahren wird. In der Figur 4 ist der Roboter 7 auf der rechten Wandplatte 6 positioniert und trägt ein Druckluftsetzgerät 8, mit dem Nägel oder Klammern pneumatisch gesetzt werden können, um die Wandplatten 6 an dem Wandelementrahmen 5 zu fixieren, sowie eine Fräseinheit 9, die genutzt wird, um Fensterdurchbrüche aus den Wandplatten 6 auszuschneiden oder überstehende Plattenkanten zu besäumen.

Dem Roboter 7 zugeordnet ist eine Einhausung 10, die außerhalb des Arbeitstisches 1 positioniert ist. In diese Einhausung 10 kehrt der Roboter 7 zurück. Die Einhausung 10, in welche sich der Roboter 7 nach der Arbeit zurückzieht, soll den Roboter 7 vor Staub schützen und zugleich die Transportverpackung für den Roboter 7 sein, in der er angeliefert wird.

Die Einhausung 10 ist höhenverstellbar und kann dabei so positioniert werden, dass die Oberseite der Wandplatten 6 etwa bündig mit der Aufstellfläche der Einhausung 10 abschließt, so dass der Roboter 7 ohne Probleme in die Einhausung 10 eingefahren oder aus der Einhausung 10 auf die Wandplatten 6 gefahren werden kann.

Die Einhausung 10 kann als Ladestation für den Roboter 7 ausgestaltet sein. Alternativ kann der Roboter 7 eine permanente Stromzufuhr erhalten, beispielsweise von der Raumdecke her. Insbesondere kann die Stromzufuhr zusammen mit einer Druckluftleitung zur Versorgung des Druckluftsetzgeräts 8 von der Decke her erfolgen.

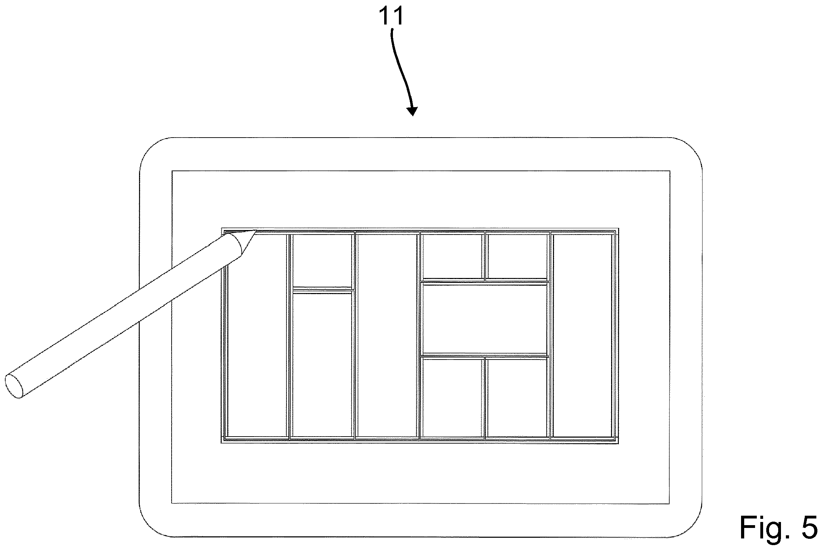

Die Bearbeitungseinrichtung umfasst ferner einen Bildschirm 11, der hier gleichzeitig als Eingabeeinheit fungiert und als Tablett-PC ausgebildet ist. Wie in der Figur 5 erkennbar ist wird auf dem Bildschirm 11 des Tablett-PCs ein Bild des Wandelementrahmens 5, wie er von der optischen Erfassungseinrichtung 3 erfasst wird, dargestellt. Mit anderen Worten wird das Abbild des einen Fachwerks ähnelnden Wandelementrahmens 5 auf dem Bildschirm 11 simuliert. An dieser Stelle besteht die Möglichkeit, den Weg des Roboters 7 zu beeinflussen. Ebenso können an dieser Stelle Bearbeitungsvorgänge und -positionen für die Fräseinheit 9 beziehungsweise das Druckluftsetzgerät 8 eingegeben werden.

Die erfindungsgemäße Bearbeitungseinrichtung kann vollautomatisch betrieben werden. In diesem Fall berechnet die Steuerung 4 auf der Grundlage der Daten, welche sie von der optischen Erfassungseinrichtung 3 erhält, die Bahnen, welche der Roboter 7 zurückzulegen hat, um den gesamten Wandelementrahmen 5 abzufahren und die Wandplatten 6 durch mittels des Druckluftsetzgeräts 8 eingetriebene Nägel oder Klammern an dem Wandelementrahmen 5 zu fixieren. Hierbei kann in der Steuerung 4 abgelegt sein, an welchen Befestigungspositionen Nägel/Klammern durch das Druckluftsetzgerät 8 in die Wandplatten 6 und den Wandelementrahmen 5 eingetrieben werden müssen, d. h. der Roboter 7 gegebenenfalls angehalten und das Druckluftsetzgerät 8 betätigt werden muss. Ebenso kann abgelegt sein, entlang welcher Bahnen der Roboter 7 geführt und die Fräseinheit 9 betätigt werden muss, um die Plattenkanten zu besäumen oder Fensterdurchbrüche in die Wandplatten 6 einzubringen.

Über den Bildschirm 11 ist es möglich, die Verfahrwege für den Roboter 7 auch manuell einzugeben. In gleicher Weise kann auch manuell festgelegt werden, an welchen Stellen eine Fräsbearbeitung erfolgen soll.

Daneben ist eine Zwitterlösung möglich, nach welcher die Steuerung 4 einen Verfahrweg für den Roboter 7, Befestigungspositionen etc. vorschlägt und der Nutzer die Möglichkeit erhält, manuell Einfluss zunehmen.

Abschließend wird der Roboter 7 aktiviert und fährt dann aus der Ladestation 10 auf die von den Wandplatten 6 gebildete Oberfläche und wird entlang der durch den festgelegten Verfahrweg vorgegebenen Bahnen verfahren, um die Fräseinheit 9 und das Druckluftsetzgerät 8 so zu positionieren, dass diese an den gewünschten Stellen die erforderlichen Arbeiten durchführen können. Dabei wird der Roboter 7 von den Kameras der optischen Erfassungseinrichtung 3 erfasst, und aufgrund der ermittelten Daten wird der Roboter 7 gesteuert bewegt.

## Patentansprüche

1. Verfahren zum Herstellen von Wandelementen aus nagelbaren und/oder klammerbaren Materialien, bei welchem
- ein Wandelementrahmen (5) eines herzustellenden Wandelements auf einem horizontalen Arbeitstisch (1) liegend positioniert wird,
- Wandplatten (6) auf den Wandelementrahmen (5) gelegt werden und
- die Wandplatten (6) an dem Wandelementrahmen (5) durch Nägel und/oder Klammern, die mittels eines Druckluftsetzgeräts (8) eingetrieben werden, befestigt werden,
**dadurch gekennzeichnet, dass**
ein mobiler - insbesondere autonomer - Roboter (7), der wenigstens ein Druckluftsetzgerät (8) und/oder wenigstens eine Fräseinheit (9) trägt, auf der von den Wandplatten (6) gebildeten Oberfläche frei verfahrbar positioniert wird,
dass der Roboter (7) auf den Wandplatten stehend automatisch gesteuert entlang der von den Wandplatten (6) gebildeten Oberfläche verfahren wird und
dass an vorgegebenen Positionen die wenigstens eine Fräseinheit (9) und/oder das wenigstens eine Druckluftsetzgerät (8) automatisch gesteuert betätigt wird, um die Wandplatten (6) zu bearbeiten und/oder an dem Wandelementrahmen (5) zu befestigen.

2. Verfahren nach Anspruch 1, **dadurch gekennzeichnet, dass** mittels einer optischen Erfassungseinrichtung (3) die Position und/oder die Gestalt des Wandelementrahmens (5) erfasst und entsprechende Daten an eine zentrale Steuerung (4) übermittelt werden.

3. Verfahren nach Anspruch 2, **dadurch gekennzeichnet, dass** anhand der von der optischen Erfassungseinrichtung (3) übermittelten Daten auf einem Bildschirm (11) der Wandelementrahmen (5) und dessen Position angezeigt werden, wobei insbesondere auf dem Bildschirm (11) neben der Position des Wandelementrahmens (5) und/oder der Wandplattenelemente (6) auch gewünschte Positionen von Wandöffnungen markiert sind.

4. Verfahren nach Anspruch 3, **dadurch gekennzeichnet, dass** der Nutzer die Möglichkeit erhält, auf dem Bildschirm (11) Bearbeitungspositionen und/oder Bearbeitungswege für die wenigstens eine Fräseinheit (9) und/oder das wenigstens eine Druckluftsetzgerät (8) festzulegen und der Roboter (7) und/oder die Fräseinheit (9) und/oder das wenigstens ein Druckluftsetzgerät (8) entsprechend der festgelegten Bearbeitungspositionen und/oder Bearbeitungswege gesteuert verfahren und betätigt werden.

5. Verfahren nach Anspruch 3 oder 4, **dadurch gekennzeichnet, dass** anhand der von optischen Erfassungseinrichtung (3) übermittelten Daten ein Verfahrweg des Roboters (7) berechnet und auf dem Bildschirm (11) angezeigt wird, wobei ein Nutzer die Möglichkeit erhält, den Verfahrweg des Roboters (7) auf dem Bildschirm (11) zu korrigieren, und dann der Roboter (7) entlang des korrigierten Verfahrwegs automatisch gesteuert verfahren wird, und/oderdass ein Nutzer die Möglichkeit erhält, einen gewünschten Verfahrweg des Roboters (7) auf dem Bildschirm (11) zu markieren und der Roboter (7) entlang des markierten Verfahrwegs automatisch gesteuert verfahren wird.

6. Verfahren nach einem der Ansprüche 2 bis 5, **dadurch gekennzeichnet, dass** anhand der von der optischen Erfassungseinrichtung (3) übermittelten Daten ein Verfahrweg des Roboters (7) berechnet und der Roboter (7) entlang des Verfahrwegs automatisch gesteuert verfahren wird und oder dass anhand der von der optischen Erfassungseinrichtung (3) übermittelten Daten die wenigstens eine Fräseinheit (9) und/oder die wenigstens ein Druckluftsetzgerät (8) automatisch betätigt wird, um die Wandplatten (6) zu bearbeiten und/oder an dem Wandelementrahmen (5) zu befestigen.

7. Verfahren nach einer der vorherigen Ansprüche, **dadurch gekennzeichnet, dass** eine optische Erfassungseinrichtung (3) verwendet wird, die mehrere Kameras und/oder Lasererfassungsgeräte umfasst, die insbesondere oberhalb des Arbeitstisches (1) vorgesehen sind, und/oder dass der Wandelementrahmen (5) beidseitig mit den Wandplatten (6) versehen wird, wobei nach der Anbringung von Wandplatten auf der einen Seite des Wandelementrahmens (5) der Wandelementrahmen (5) gewendet und auf der offenen Seite mit Wandplatten (6) belegt wird, die abschließend an dem Wandelementrahmen (5) automatisch gesteuert durch den Roboter (7) und das wenigstens eine Druckluftsetzgerät (8) und/oder die wenigstens eine Fräseinheit (9) an dem Wandelementrahmen (5) befestigt und/oder bearbeitet werden.

8. Bearbeitungseinrichtung zum Herstellen von Wandelementen aus nagelbaren und/oder klammerbaren Materialien, insbesondere gemäß einem Verfahren nach einem der vorherigen Ansprüche, mit
- einem horizontalen Arbeitstisch (1), auf welchem ein Wandelementrahmen (5) eines herzustellenden Wandelements liegend positioniert werden kann und
- einem mobilen - insbesondere autonomen - Roboter (7), der wenigstens ein Druckluftsetzgerät (8) und/oder wenigstens eine Fräseinheit (9) trägt, **gekennzeichnet durch**
- eine optische Erfassungseinrichtung (3), die ausgebildet ist, um die Position und/oder die Gestalt des Wandelementrahmens (5) zu erfassen, und
- eine zentrale Steuerung (4), die mit der optischen Erfassungseinrichtung (3) und dem Roboter (7) gekoppelt und ausgebildet ist, um auf der Grundlage von Daten, die sie von der optischen Erfassungseinrichtung (3) erhält, den Roboter (7), der auf einer Oberfläche positioniert ist, die von Wandplatten (6) gebildet wird, welche auf einen auf dem Arbeitstisch (1) positionierten Wandelementrahmen (5) gelegt sind, auf den Wandpaletten stehend entlang der Oberfläche automatisch zu verfahren, und an vorgegebenen Positionen die wenigstens eine Fräseinheit (9) und/oder wenigstens ein Druckluftsetzgerät (8) automatisch zu betätigen, um die Wandplatten (6) zu bearbeiten und/oder an einem Wandrahmenelement (5) zu befestigen.

9. Bearbeitungseinrichtung nach Anspruch 8, **dadurch gekennzeichnet, dass** mit der Steuerung (4) ein Bildschirm (11) verbunden ist, auf dem ein Bild des Wandelementrahmes (5) und dessen Position auf dem Arbeitstisch (1) auf der Grundlage der von der optischen Erfassungseinrichtung (3) übermittelten Daten angezeigt wird.

10. Bearbeitungseinrichtung nach Anspruch 9, **dadurch gekennzeichnet, dass** der Bildschirm (11) für eine direkte Dateneingabe - insbesondere als Touchpad - ausgebildet ist und ein Nutzer die Möglichkeit erhält, einen gewünschten Verfahrweg des Roboters (7) auf dem Bildschirm (11) zu markieren, wobei die Steuerung (4) ausgebildet ist, den Roboter (7) entlang des markierten Verfahrwegs automatisch gesteuert zu verfahren.

11. Bearbeitungseinrichtung nach einen der Ansprüche 9 oder 10, **dadurch gekennzeichnet, dass** der Bildschirm (11) für eine direkte Dateneingabe - insbesondere als Touchpad - ausgebildet ist und ein Nutzer die Möglichkeit erhält, Bearbeitungspositionen und/oder Bearbeitungswege für die wenigstens eine Fräseinheit (9) und/oder das wenigstens ein Druckluftsetzgerät (8) festzulegen, wobei die Steuerung (4) ausgebildet ist, um den Roboter (7) und/oder die Fräseinheit (9) und/oder das wenigstens ein Druckluftsetzgerät (8) entsprechend der festgelegten Bearbeitungspositionen und/oder Bearbeitungswege gesteuert zu verfahren und betätigen.

12. Bearbeitungseinrichtung nach Anspruch 10 oder 11, **dadurch gekennzeichnet, dass** die Steuerung (4) ausgebildet ist, um anhand des von der optischen Erfassungseinrichtung (3) erhaltenen Daten einen Verfahrweg für den Roboter (7) zu berechnen und den Verfahrweg auf dem Bildschirm (11) anzuzeigen, wobei die Möglichkeit besteht, den Verfahrweg des Roboters (7) manuell zu korrigieren, und die Steuerung ausgebildet ist, den Roboter (7) entlang des korrigierten Verfahrwegs automatisch gesteuert zu verfahren.

13. Bearbeitungseinrichtung nach einem der Ansprüche 8 bis 12, **dadurch gekennzeichnet, dass** die Steuerung (4) ausgebildet ist, um auf der Grundlage der von der optischen Erfassungseinrichtung (3) übermittelten Daten einen Verfahrweg für den Roboter (7) zu berechnen und den Roboter (7) entlang des Verfahrwegs automatisch zu verfahren.

14. Bearbeitungseinrichtung nach einen der Ansprüche 8 bis 13, **dadurch gekennzeichnet, dass** die optische Erfassungseinrichtung (3) mehrere Kameras und/oder Lasererfassungsgeräte umfasst, die insbesondere oberhalb des Arbeitstisches (1) vorgesehen sind.

## Claims

1. Method for manufacturing wall elements from nailable and/or stapleable materials, in which
- a wall element frame (5) of a wall element to be produced is positioned lying on a horizontal work table (1),
- wall panels (6) are placed on the wall element frame (5) and
- the wall panels (6) are fixed to the wall element frame (5) by nails and/or staples driven in by means of a compressed air setting device (8),
**characterized in that**
a mobile - in particular autonomous - robot (7), carrying at least one compressed air setting device (8) and/or at least one milling unit (9), which is positioned in a freely movable manner on the surface formed by the wall panels (6),
**in that** the robot (7) standing on the wall panels is moved automatically controlled along the surface formed by the wall panels (6), and
**in that** at predetermined positions the at least one milling unit (9) and/or the at least one compressed air setting device (8) is actuated in an automatically controlled manner in order to machine the wall panels (6) and/or to fasten them to the wall element frame (5).

2. Method according to claim 1, **characterized in that**, by means of an optinal detection device (3), the position and/or the shape of the wall element frame (5) is detected and corresponding data is transmitted to a central control unit (4).

3. Method according to claim 2, **characterized in that** the wall element frame (5) and its position are displayed on a screen (11) by means of the data transmitted by the optical detection device (3), wherein in particular on the screen (11), in addition to the position of the wall element frame (5) and/or the wall panel elements (6), desired positions of wall openings are also marked.

4. Method according to claim 3, **characterized in that**, the user is given the possibility of defining on the screen (11) machining positions and/or machining paths for the at least one milling unit (9) and/or the at least one compressed air setting device (8) and the robot (7) and/or the milling unit (9) and /or the at least one compressed air setting device (8) are moved and actuated in a controlled manner according to the defined machining positions and/or machining paths.

5. Method according to claim 3 or 4, **characterized in that** a travel path of the robot (7) is calculated and displayed on the screen (11) on the basis of the date transmitted by the optical detection device (3), wherein a user is given the opportunity to correct the travel path of the robot (7) on the screen (11), and then the robot (7) is moved along the corrected travel path in an automatically controlled manner, and/or **in that** a user is given the opportunity to mark a desired travel path of the robot (7) on the screen (11) and the robot (7) is moved along the marked travel path in an automatically controlled manner.

6. Method according to any of claims 2 to 5, **characterized in that** a travel path of the robot (7) is calculated on the basis of the data transmitted by the optical detection device (3) and the robot (7) is moved along the travel path in an automatically controlled manner, and/or **in that** the at least one milling unit (9) and/or the at least one compressed air setting device (8) is automatically actuated on the basis of the data transmitted by the optical detection device (3) in order to machine the wall panels (6) and/or to fasten them to the wall element frame (5).

7. Method according to any of the preceding claims 2 to 5, **characterized in that** an optical detection device (3) is used which comprises several cameras and/or laser detection devices, which are provided in particular above the work table (1), and/or **in that** the wall element frame (5) is provided on both sides with wall panels (6), wherein, after the attachment of wall panels on one side of the wall element frame (5) the wall element frame (5) is turned over and covered on the open side with wall panels (6) which are finally attached to the wall element frame (5) and/or machined on the wall element frame (5) in an automatically controlled manner by the robot (7) and the at least one compressed air setting device (8) and/or the at least one milling unit (9).

8. Machining device for manufacturing wall elements from nailable and/or stapleable materials, in particular according to a method according to one of the preceding claims, with
- a horizonal work table (1), on which a wall element frame (5) of a wall element to be manufactured can be positioned lying down, and
- a mobile - in particular autonomous - robot (7), carrying at least one compressed air setting device (8) and/or at least one milling unit (9),
**characterized by**
- an optical detection device (3) adapted to detect the position and/or the shape of the wall element frame (5), and
- a central control unit (4) coupled to said optical detection device (3) and said robot (7) and adapted to - based on data received from said optical detection device (3) - move said robot (7) positioned on a surface is formed by wall panels (6), which are placed on a wall element frame (5) positioned on the work table (1), automatically along the surface standing on the wall panels, and to automatically actuate at predetermined positions the at least one milling unit (9) and/or at least one compressed air setting device (8) in order to machine the wall panels (6) and/or to fasten them to the wall element frame (5).

9. Machining device according to claim 8, **characterized in that** a screen (11) is connected to the control unit (4), on which a picture of the wall element frame (5) and its position on the worktable (1) is displayed on the basis of the data transmitted by the optical detection device (3).

10. Machining device according to claim 9, **characterized in that** the screen (11) is designed for direct data input - in particular as a touch pad - and a user is given the opportunity to mark a desired travel path of the robot (7) on the screen (11), the control unit (4) being designed to move the robot (7) in an automatically controlled manner along the marked travel path.

11. Machining device according to any of claims 9 or 10, **characterized in that** the screen (11) is designed for direct data input - in particular as a touch pad - and the user is given the possibility to define machining positions and/or machining paths for the at least one milling unit (9) and/or the at least one compressed air setting device (8), the control unit being designed to move the robot (7) and/or the milling unit (9) and/or the at least one compressed air setting device (8) in an automatically controlled manner according to the defined machining positions and/or machining paths.

12. Machining device according to claim 10 or 11, **characterized in that** the control unit (4) is designed to calculate a travel path for the robot (7) on the basis of the data received from the optical detection device (3) and to display the travel path on the screen (11), wherein it is possible to correct the travel path of the robot (7) manually, and the central control unit is adapted to move the robot (7) along the corrected travel path in an automatically controlled manner.

13. Machining device according to any of claims 8 to 12, **characterized in that** control unit (4) is adapted to calculate a travel path for the robot (7) on the basis of the data transmitted from the optical detection device (3) and to move the robot (7) along the travel path in an automatically controlled manner.

14. Machining device according to any of claims 8 to 13, **characterized in that** the optical detection device (3) comprises a plurality of cameras and/or laser detection devices which are provided in particular above the worktable (1).

## Revendications

1. Procédé de fabrication d'éléments de paroi en matériaux clouables et/ou agrafables, dans lequel
- un cadre d'élément de paroi (5) d'un élément de paroi à produire est positionné couché sur une table de travail horizontale (1),
- des panneaux de paroi (6) sont placées sur le cadre d'élément de paroi (5) et
- les panneaux de paroi (6) sont fixés au cadre d'élément de paroi (5) par des clous et/ou des agrafes enfoncés au moyen d'un dispositif de pose à air comprimé (8)
**caractérisé en ce que**
un robot mobile (7) - en particulier autonome - portant au moins un dispositif de pose à air comprimé (8) et/ou au moins une unité de fraisage (9), est positionné de manière librement mobile sur la surface formée par les panneaux de paroi (6),
**en ce que** le robot (7) étant debout sur les panneaux de paroi est déplacé de manière automatique et contrôlée le long de la surface formé par les panneaux paroi (6) et
**en ce que**, dans des positions prédéterminées, l'unité de fraisage (9) et/ou le dispositif de pose à air comprimé (8), au nombre d'au moins un, sont actionnés de manière commandée automatiquement pour usiner les panneaux de paroi (6) et/ou les fixer sur le cadre d'élément de paroi (5).

2. Procédé selon la revendication 1, **caractérisé en ce qu'** au moyen d'un dispositif de détection optique (3), la position et/ou la forme du cadre d'élément de paroi (5) est détectée et les données correspondantes sont transmises à une unité de commande centrale (4).

3. Procédé selon la revendication 2, **caractérisé en ce que** le cadre d'élément de paroi (5) et sa position sont affichés sur un écran (11) au moyen des données transmises par le dispositif de détection optique (3), les positions souhaitées des ouvertures étant en particulier également marquées sur l'écran (11), en plus de la position du cadre d'élément de paroi et/ou des éléments de panneaux de paroi (6).

4. Procédé selon la revendication 3, **caractérisé en ce que** l'utilisateur a la possibilité de définir sur l'écran (11) des positions et/ou des trajets d'usinage pour la au moins une unité de fraisage (9) et/ou le au moins un dispositif de pose à air comprimé (8) et le robot (7) et/ou l'unité de fraisage (9) et/ou le au moins un dispositif de pose à air comprimé (8) sont déplacés et actionnés de manière contrôlée selon les positions et/ou les trajets d'usinage définis.

5. Procédé selon la revendication 3 ou 4, **caractérisé en ce qu**'un trajet de déplacement du robot (7) est calculé et affiché sur l'écran (11) sur la base des données transmises par le dispositif de détection optique (3), la possibilité de corriger le trajet de déplacement du robot (7) sur l'écran (11) étant donné à un utilisateur, puis le robot (7) étant déplacé le long de la trajectoire corrigé de manière contrôlée automatiquement, et/ou qu'un utilisateur à la possibilité de marquer un trajectoire souhaité du robot (7) sur l'écran (11) et que le robot (7) est déplacé le long de la trajectoire marquée de manière automatiquement contrôlée.

6. Procédé selon l'une des revendications 2 à 5, **caractérisé en ce qu'**un trajet de déplacement du robot (7) est calculé sur la base des données transmises par le dispositif de détection optique (3) et le robot (7) est déplacé le long du trajet de déplacement d'une manière automatiquement contrôlée, et/ou **en ce que** la au moins une unité de fraisage (9) et/ou au moins un dispositif de pose à air comprimé (8) est automatiquement actionné sur la base des données transmises par le dispositif de détection optique (3), afin d'usiner les panneaux de paroi (6) et/ou de les fixer au cadre d'éléments de paroi (5).

7. Procédé selon l'une des revendications précédentes, **caractérisé en ce qu'**un dispositif de détection optique (3) qui comprend plusieurs caméras et/ou dispositifs de détection laser, qui sont prévus en particulier au-dessus de la table de travail (1), est utilisé et/ou **en ce que** le cadre d'élément de paroi (5) est pourvu des deux côtés des panneaux de paroi (6), le cadre d'élément de paroi (5) étant retourné après la fixation des panneaux de paroi sur un côté du cadre d'élément de paroi (5) et étant recouvert sur le côté ouvert par des panneaux de paroi (6) qui sont finalement fixés au cadre d'éléments de paroi (5) et/ou usiné sur le cadre d'élément de paroi (5) sous la commande automatique du robot (7) et de le au moins d'un dispositif de pose à air comprimé (8) et/ou de la au moins une unité de fraisage (9).

8. Dispositif d'usinage pour la fabrication d'éléments de paroi en matériaux clouables et/ou serrables, en particulier selon un procédé selon l'une des revendications précédentes, avec
- une table de travail horizontale (1) sur laquelle un cadre d'un élément de paroi (5) d'un élément de paroi à fabriquer peut être positionné en position couché, et,
- un robot mobile (7) - en particulier autonome - portant au moins un dispositif de pose à air comprimé (8) et/ou au moins une unité de fraisage (9), **caractérisé par**
- un dispositif de détection optique (3) adapté pour détecter la position et/ou la forme du cadre d'élément de paroi (5), et
- une unité de commande (4) couplé audit dispositif de détection optique (3) et audit robot (7) et adapté pour commander ledit robot (7), qui est positionné sur une surface formée par des panneaux de paroi (6), en fonction de données reçues dudit dispositif de détection optique (3), les panneaux de paroi (6) étant placés sur un cadre d'élément de paroi (5) positionné sur la table de travail (1), pour se déplacer automatiquement le long de la surface se trouvant sur les panneaux de paroi, et pour actionner automatiquement à des positions prédéterminées au moins une unité de fraisage (9) et/ou au moins un dispositif de pose à air comprimé (8) afin d'usiner les panneaux de paroi (6) et/ou de les fixer à un élément de cadre de paroi (5).

9. Dispositif d'usinage selon la revendication 8, **caractérisé en ce qu**'un écran (11) est relié à l'unité de commande (4), sur lequel une image du cadre d'élément de paroi (5) et de sa position sur la table de travail (1) est affichée sur la base des données transmises par le dispositif de détection optique (3).

10. Dispositif d'usinage selon la revendication 9, **caractérisé en ce que** l'écran (11) est conçu pour l'entrée directe de données - en particulier sous la forme d'un pavé tactile - et un utilisateur a la possibilité de marquer sur l'écran (11) un trajet de déplacement souhaitée du robot (7), l'unité de commande (4) étant conçue pour déplacer de manière automatiquement contrôlée le robot (7) le long du trajet de déplacement marquée.

11. Dispositif d'usinage selon l'une des revendications 9 ou 10, **caractérisé en ce que** l'écran (11) est conçu pour l'entrée directe de données - en particulier sous forme de pavé tactile - et un utilisateur a la possibilité de définir des positions et/ou des trajets d'usinage pour la au moins une unité de fraisage (9) et/ou le au moins un dispositif de pose à air comprimé (8), l'unité de commande (4) étant conçue pour déplacer et actionner de manière contrôlée le robot (7) et/ou l'unité de fraisage (9) et/ou le au moins un dispositif de pose à air comprimé (8) en fonction des positions et/ou des trajets d'usinage définis.

12. Dispositif d'usinage selon la revendication 10 ou 11, **caractérisé en ce que** l'unité de commande (4) est conçu pour calculer un trajet de déplacement pour le robot (7) sur la base des données reçues du dispositif de détection optique (3) et pour afficher le trajet de déplacement sur l'écran (11), il y ayant la possibilité de corriger manuellement le trajet de déplacement du robot (7), et l'unité de commande étant conçue pour déplacer le robot (7) le long du trajet de déplacement corrigé d'une manière automatiquement contrôlée.

13. Dispositif d'usinage selon l'une des revendications 8 à 12, **caractérisé en ce que** l'unité de commande (4) est conçu pour calculer un trajet de déplacement pour le robot (7) sur la base des données transmises par le dispositif de détection optique (3) et pour déplacer automatiquement le robot (7) le long du trajet de déplacement.

14. Dispositif d'usinage selon l'une des revendications 8 à 13, **caractérisé en ce que** le dispositif de détection optique (3) comprend une pluralité de cameras et/ou dispositifs de détection laser qui sont prévus en particulier au-dessus de la table de travail (1).
